(19) Europäisches Patentamt
European Patent Office
Office européen des brevets

(11) **EP 3 641 056 B1**

(12) **EUROPÄISCHE PATENTSCHRIFT**

(45) Veröffentlichungstag und Bekanntmachung des Hinweises auf die Patenterteilung:
**23.06.2021   Patentblatt 2021/25**

(51) Int Cl.:
*H01Q 3/24* (2006.01)          *F41H 13/00* (2006.01)
*H01Q 3/30* (2006.01)          *H01Q 21/20* (2006.01)
*H01Q 1/32* (2006.01)          *H01Q 9/32* (2006.01)

(21) Anmeldenummer: **19201714.3**

(22) Anmeldetag: **07.10.2019**

(54) **HPEM-QUELLE, FAHRZEUG UND VERFAHREN**

HPEM SOURCE, VEHICLE AND METHOD

SOURCE HPEM, VÉHICULE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2018   DE 102018008381**

(43) Veröffentlichungstag der Anmeldung:
**22.04.2020   Patentblatt 2020/17**

(73) Patentinhaber: **Diehl Defence GmbH & Co. KG 88662 ÜBERLINGEN (DE)**

(72) Erfinder:
• **Stark, Robert**
  **91438 Bad Windsheim (DE)**
• **Hertel, Martin**
  **91207 Lauf (DE)**

(74) Vertreter: **Diehl Patentabteilung c/o Diehl Stiftung & Co. KG Stephanstraße 49 90478 Nürnberg (DE)**

(56) Entgegenhaltungen:
EP-A1- 3 217 188     US-A1- 2018 058 826
US-B1- 6 317 092     US-B1- 8 514 130

**Beschreibung**

Die Erfindung betrifft eine HPEM-Quelle (High-Power Electro-Magnetics) zur Aussendung eines HPEM-Pulses in einer gewünschten Abstrahlrichtung, ein Fahrzeug mit einer HPEM-Quelle und ein Verfahren zur Aussendung eines HPEM-Pulses in einer gewünschten Abstrahlrichtung.

Bekannt ist eine 360°-Abdeckung mit HPEM-Quellen durch Einsatz einer einzelnen rundum strahlenden Dipolantenne oder einer stark richtend abstrahlenden HPEM-Antenne (zum Beispiel Horn-Antenne) oder eines HPEM Antennen-Arrays. In den beiden letzteren Fällen ist für das Ausrichten der HPEM Antenne / des Antennen-Arrays auf das Ziel, die Zielnachführung und Realisierung einer 360°-Abdeckung bei entsprechend geforderter Leistung / Reichweite eine mechanisch / elektrische Drehplattform erforderlich. Bei agilen und schnell fliegenden Zielen sind insbesondere im Nahbereich ein entsprechend schnelles "mechanisches" Einschwenken auf das Ziel und eine agile Zielnachführung mit hohen Drehmomenten erforderlich.

Die Druckschrift EP 3 217 188 A1 beschreibt ein Sekundärradar mit Nebenkeulenunterdrückung zur Vermeidung einer Falschzieldarstellung, umfassend - eine erste Gruppe von Strahlerelementen, deren Überlagerung eine elektronisch schwenkbare Richtcharakteristik zur Aussendung eines Abfragesignals erzeugt, - eine zweite Gruppe von Strahlerelementen, deren Überlagerung ein Kontroll-Signal zur Nebenkeulenunterdrückung erzeugt, und wobei - die Strahlerelemente der ersten und zweiten Gruppe die Strahlerelemente einer gemeinsamen Phased-Array Antenne sind.

Die Druckschrift US 6 317 092 B1 bezieht sich auf eine künstliche dielektrische Linsenantenne, die eine preiswerte, richtungsabhängig abtastende Antenne mit einer relativ hohen Verstärkung bietet. Die Antenne verwendet ein Array aus parasitären Elementen, die auf einem Substrat angeordnet sind, wobei die Elemente eine künstliche dielektrische Linse bilden, die durch Treiberelemente angeregt wird.

Ferner, bezieht sich die Druckschrift US 8 514 130 B1 auf den Bereich der Antennentechnik (z. B. Multifunktionsantennen) und insbesondere auf Systeme und Methoden zur Bereitstellung von gerichteter Spektralwahrnehmung über einen oder mehrere Knoten, wobei jeder Knoten eine einzige Richtantenne besitzt.

Die Druckschrift US 2018/058826 A1, die den nächstkommenden Stand der Technik bildet, beschreibt ein Verfahren zum Beschädigen mindestens eines Ziels durch eingekoppelte elektromagnetische Strahlung, die von einem Mikrowellen-Waffensystem, das elektromagnetische Leistung und Energie erzeugt, auf mindestens ein Ziel gerichtet und übertragen wird. Das Verfahren umfasst unter anderem Erzeugen von elektromagnetischer Leistung und Energie in Form einer Vielzahl von unabhängig getriggerten und breitbandigen Impulsen aus einer Anordnung von HPM-TEM-Hörnern unter Verwendung der Cassegrain-Antenne.

Aufgrund der begrenzten Leistung eines einzelnen HPEM-Resonators / Dipolantenne ist die Reichweite sehr begrenzt. Damit eignet sich ein einziger Dipol mit Rundumstrahlcharakteristik (Dipolcharakteristik) wie er bisher für eine 360°-Abdeckung zur Verfügung steht, bezüglich der geforderten Wirkreichweiten nur sehr bedingt bzw. gar nicht. Längerreichweitige Horn-Antennen oder Antennen-Arrays haben eine starke Richtcharakteristik und sind im Wesentlichen auf eine Hauptabstrahlrichtung entlang der Normalen der Antennen-Apertur / Fläche in einen Halbraum fokussiert. Zur Realisierung einer 360°-Abdeckung mit solchen Antennensystemen wird daher die Horn-Antenne oder das Antennen-Array auf einer entsprechend mechanisch / elektrischen Drehplattform integriert. Bei einem Gesamtgewicht der HPEM-Antennen bzw. des HPEM-Systems im Bereich von mehreren 100 kg und geforderten Drehraten von bis zu mehreren 10 Grad/s oder mehr, stellt dies aufgrund der erforderlichen hohen Drehmomente / Beschleunigungen extrem hohe Anforderungen an die Drehplattform und das Gesamtsystem. Für stationäre oder abgesetzte Anwendungen (zum Beispiel auf einem ausreichend stabilen Trailer), bei ausreichender Verfügbarkeit von Bauraum / Platz und entsprechend hohem möglichem zulässigem Gesamtgewicht, lässt sich eine 360°-Abdeckung mit einer entsprechenden Drehplattform gut realisieren, auch wenn derartige Plattformen in der Regel sehr aufwendig und kostspielig sind. Zusätzlich müssen solche Drehplattformen gegen die Beeinflussung durch HPEM-Impulse geschützt und gehärtet werden, was auch eines gewissen Aufwandes bedarf.

Aufgabe der Erfindung ist es, den Einsatz von HPEM zu verbessern.

Die Aufgabe wird gelöst durch eine HPEM-Quelle (High-Power Electro-Magnetics) gemäß Patentanspruch 1 zur Aussendung eines HPEM-Pulses in einer gewünschten Abstrahlrichtung. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Quelle enthält mindestens drei Antennen. Jede der Antennen dient zur jeweiligen Aussendung eines Pulsanteils, also eines Anteils des per Überlagerung der Pulsanteile zu erzeugenden HPEM-Pulses. Die Antennen sind in fester Relativlage zueinander angebracht, insbesondere fest bzw. unbeweglich auf einer Tragstruktur montiert. Jeweils mindestens zwei der Antennen sind zu einer Gruppe zusammengefasst. Es sind mindestens zwei Gruppen von Antennen vorhanden, wobei sich die beiden Gruppen in mindestens einer Antenne unterscheiden. Insbesondere haben die Gruppen keine oder nur eine Antenne, insbesondere nicht alle Antennen gemeinsam. Jeder der Gruppen ist eine Hauptrichtung zugeordnet. In der Quelle sind mindestens zwei verschiedene Hauptrichtungen vorhanden. Insbesondere sind alle Hauptrichtungen aller Gruppen unterschiedlich, d. h.

Die Quelle enthält außerdem eine Steuereinheit. Diese ist dazu eingerichtet bzw. dazu ausgebildet, zum Beispiel durch Festverdrahtung oder Programmierung, die Antennen hinsichtlich der Aktivierung und der Phasenlage ihres jeweiligen Pulsanteils so anzusteuern, dass sich für mindestens eine der Gruppen die Pulsanteile der Antennen zum HPEM-Puls überlagern, wobei dessen aktuelle Abstrahlrichtung in einem bestimmten Winkelbereich um die Hauptrichtung wählbar ist, wobei der Winkelbereich kleiner als 360° ist. Die Antennen können dabei auch so angesteuert werden, dass zwei oder mehr HPEM-Pulse von insbesondere unterschiedlichen Gruppen / Antennen abgestrahlt werden.

Insbesondere weist die Quelle 3, 4 oder 8 Gruppen auf. Insbesondere sind 3, 4, 5, 6 oder 7 Antennen pro Gruppe vorgesehen. Die Antennenzahl kann sich für einzelne Gruppen unterscheiden, nicht alle Gruppen müssen also die gleiche Anzahl an Antennen aufweisen.

Die Steuereinheit ist insbesondere dazu ausgebildet, dass immer nur eine ausgewählte Gruppe aktiv ist, d. h. mindestens eine Antenne enthält, die durch ein aktives Antennensignal angesteuert ist. Insbesondere werden auch Antennen von zwei, drei oder mehr Gruppen angesteuert, um einen stärkeren Summenpuls oder auch zwei oder mehr getrennte Summenpulse zu erzeugen. Innerhalb mindestens einer Gruppe werden wenigstens zwei oder mehr oder alle Antennen aktiv angesteuert. Die Steuerung der "Aktivierung" einer Antenne bedeutet dabei, die Antenne entweder auf Masse zu schalten, im Leerlauf zu betreiben (beides ist eine Nicht-Aktivierung) oder mit einem Sendesignal einer Amplitude größer Null zu versorgen und dabei auch die Signalamplitude zu beeinflussen. Nicht aktivierte und im Leerlauf gehaltene Antennen können also die Strahlformung (Formung des HPEM-Pulses) als "passive Reflektoren" unterstützen.

Der Winkelbereich weist insbesondere eine Größe von 360° geteilt durch die Anzahl der Gruppen auf. Insbesondere ist der Winkelbereich ausgehend hiervon um eine Überlappung mit den Winkelbereichen anderer Gruppen von insbesondere 5%, 10%, 15%, 20%, 25%, 30%, 40% oder 50 % seiner Größe vergrößert.

Die Erfindung beruht auf der Erkenntnis, dass für den mobilen Einsatz zum Beispiel auf Fahrzeugen mit begrenztem Bauraum, limitiertem möglichem Gesamtgewicht und entsprechend hohen Anforderungen an die Reichweite und Integrationsfähigkeit des Systems, HPEM-Schutz-Konzepte realisiert werden sollen.

Gemäß der Erfindung ergibt sich somit eine Verstärkung, Ausrichtung, Fokussierung und Nachführung von HPEM-Strahlen/-Impulsen mit Realisierung einer 360°-Abdeckung ohne die Verwendung einer aufwendigen Drehplattform. Eine gewichts- und platzsparende, unauffällige und oberflächenkonforme Integration der HPEM-Technologie und -Antennen auf mobilen Plattformen zur Realisierung eines Rundumschutzes im Nächstbereich ist ermöglicht.

Die Pulsanteile bzw. der HPEM-Puls weist insbesondere DS-Charakteristik bzw. - Wellenform (damped sinusoidal) auf. Gemäß der Erfindung ergibt sich damit ein HPEM DS Richtantennen-System. Die Antennen sind insbesondere Resonator-Antennen / Dipol- / Monopol-Antennen / Antennenstäbe / Stubs.

Beim Betrieb der HPEM-Quelle sind unterschiedliche Pulsformen möglich (DS, UWB Ultra-Wide-Band, WB Wide-Band, Schmalband), unterschiedliche Antennenausführungen (Monopol, Dipol, Stab, ...) möglich, die Kombination von Einzelantennen / Antennen-Gruppen möglich. Die Hauptrichtung oder Hauptstrahlrichtung (vorwärts/rückwärts) ist abhängig von der Phasenlage / Synchronisation und Abstand der Antennenstäbe / Resonatoren zueinander. Die Richtcharakteristik ist abhängig von Auslegung, Anpassung und zeitlicher Steuerung der Aktivierung und Phasenlage. Eine wirksame Antennenlänge der Antenne kann l≈λ/4, λ/2, λ5/8, ... betragen (optimiert auf das gewünschte Abstrahlverhalten). In Bezug auf die Abstände zwischen den Antennen ist eine gleichmäßige oder ungleichmäßige Verteilung möglich. Unterschiedliche geometrische Anordnungen und/oder Gruppierungen sind möglich.

Die Anregung, Abstrahlung und Richtcharakteristik der Antennen bzw. Gruppen und damit der HPEM-Quelle sind abhängig von Phasenlagen, Frequenz, Abstand zwischen den Antennen und der zeitlichen Ansteuerung der Dipole / Antennen / Stäbe.

Durch eine phasenrichtige Ansteuerung von Antennen-Reihen/Gruppen kann eine gerichtete Abstrahlung von HPEM-Pulsen erfolgen. Eine Strahlnachführung ist somit durch simples Umschalten zwischen Antennen-Reihen/Gruppen möglich.

Insbesondere enthält die HPEM-Quelle also keine Hornstrukturen zur Strahlformung, sondern alleine die Antennen in Form der Resonatorstäbe etc. Lediglich eine metallische Grundplatte, insbesondere in Form eines Trägers könnte vorhanden sein.

In einer bevorzugten Ausführungsform sind alle Antennen in einer gemeinsamen Ebene angeordnet. Antenne mit einer Längserstreckung (Stäbe, Stubs, ...) sind dabei insbesondere senkrecht zur Ebene ausgerichtet. Insbesondere für Abstrahlrichtungen parallel zur Ebene sind dabei notwendige Phasenbeziehungen etc. zwischen einzelnen Antennen zur Erzielung einer gewünschten Pulscharakteristik (Form, Reichweite) einfach bestimmbar.

Erfindungsgemäß sind für mindestens eine der Gruppen alle Antennen der Gruppe entlang einer Geraden angeordnet, wobei die Gerade die Hauptrichtung ist. Hier sind die notwendigen Phasenbeziehungen etc. zwischen einzelnen Antennen zur Erzielung einer gewünschten Pulscharakteristik (Form, Reichweite) besonders einfach bestimmbar. Bei vier in Reihe befindlichen Antennen lassen sich beispielsweise folgende Zusammenhänge realisieren: nur eine äußere Antenne wird aktiv mit einem Signal versorgt, die restlichen werden leerlaufend gehalten, um einen Puls nur nach einer Hauptrichtung auszusenden. Alternativ werden die Antennen in Reihe mit Phasen von 0°, 90°, 90° und 0°, um zwei gegenläufige Pulse in Hauptrichtung symmetrisch auszusenden. Alternativ werden die Antennen mit 0°, 90°, 180° und 270° betrieben, um einen verstärkten Puls nach einer Seite in Hauptrichtung auszusenden.

Erfindungsgemäß sind mindestens zwei Gruppen wie eben beschrieben (Geraden-Anordnung) vorhanden. Mindestens zwei der jeweiligen Geraden sind unterschiedliche Durchmesserlinien eines gedachten Kreises. Die Antennen einer jeweiligen Gruppe sind bezogen auf den Kreis auf einem Radius oder dem gesamten Durchmesser entlang der Geraden verteilt. Die entsprechenden Geraden der Durchmesserlinien schneiden sich alle im Kreismittelpunkt und verlaufen durch diesen. Insbesondere existiert eine Antenne im Kreismittelpunkt oder nicht. Eine dort existierende Antenne ist insbesondere zwei oder mehr Gruppen gemeinsam. Durch entsprechende Kreis- bzw. strahlenförmige Anordnungen von Antennen beziehungsweise Gruppen lässt sich besonders einfach eine 360°-Abdeckung realisieren.

In einer bevorzugten Ausführungsform sind für mindestens eine der Gruppen alle Antennen der Gruppe innerhalb eines Kreissegments mit einem Öffnungswinkel nicht größer als 180° angeordnet. Eine derartige Antennenanordnung lässt sich insbesondere mit der oben genannten Durchmesser- oder Radiusanordnung der Quellen kombinieren. Insbesondere sind ausreichend Kreissegmente vorhanden, um insgesamt einen 360° Kreis zu bilden. Insbesondere sind alle Kreissegmente gleich groß. Dabei sind auch Überlappungen möglich. Zum Beispiel können drei 120°-Segmente (ggf. mit Überlappung, also z. B. auch 130°, 140°, 150° pro Segment) einen Vollkreis bilden. Eine Rundumabdeckung lässt sich so besonders einfach realisieren.

In einer bevorzugten Ausführungsform sind die Antennen ausschließlich entlang zweier Geraden angeordnet, die die begrenzenden Radien des Kreissegments darstellen. Das entsprechende Kreissegment wird somit durch zwei begrenzende Antennenlinien bzw. -geraden "aufgespannt". So können wieder besonders einfache Phasenbeziehungen zwischen den Antennen gefunden werden, um z. B. die Abstrahlrichtung innerhalb des Kreissegmentes zu verschwenken.

In einer bevorzugten Ausführungsform weisen für mindestens eine der Gruppen drei bzw. vier oder mehrere oder alle jeweils benachbarte Antennen der Gruppe gleiche Abstände zueinander auf. Dies gilt insbesondere für Antennen auf den o.g. Geraden. In diesem Fall sind die Antennen dann entlang der Geraden äquidistant verteilt. Auch hier ist die Ermittlung von Phasenbeziehungen zwischen einzelnen Antennen zur Erzielung gewünschter Charakteristiken eines HPEM-Pulses besonders einfach.

In einer bevorzugten Ausführungsform ist die Steuereinheit dazu eingerichtet, mindestens eine der Antennen als passive Reflektorantenne leerlaufend zu halten. Durch den Leerlauf einer Antenne wirkt diese als Reflektor und kann somit zur besonders wirksamen Strahlformung des HPEM-Pulses verwendet werden.

In einer bevorzugten Ausführungsform enthält die HPEM-Quelle einen Träger. Alle Antennen sind dann fest auf dem Träger montiert. Der Träger ist gegenüber einem Untergrund innerhalb eines Schwenkbereiches kleiner als 360° schwenkbar. Die Steuerung ist dazu eingerichtet, einen aktuellen Schwenkwinkel des Trägers innerhalb des Schwenkbereiches bezüglich des Untergrundes zu steuern. Durch den Träger ist die feste Relativlage der Antennen zueinander gesichert. Der Träger kann damit insbesondere als Drehplattform für den Untergrund, zum Beispiel eine Fahrzeugkarosserie, ausgeführt werden. Da die Abstrahlrichtung der Antennenanordnung ohnehin bereits rein elektronisch, also durch geänderte Ansteuerung der Antennen, veränderbar ist, kann der Schwenkbereich kleiner als 360° ausgeführt werden, ohne auf einen Rundumschutz verzichten zu müssen.

In einer bevorzugten Variante dieser Ausführungsform beträgt der Schwenkwinkel die Hälfte des größten der Winkelbereiche. Dies führt zu einer besonders günstigen Kombination aus mechanischer und elektronischer Verschwenkung der Abstrahlrichtung. Auch hier kann der Schwenkwinkel wieder alternativ auch etwas größer ausgeführt sein, d. h. insbesondere wie oben erläutert zuzüglich 5% - 50% des Winkelbereiches.

In einer bevorzugten Variante dieser Ausführungsform weist der Träger eine Grundform eines N-Ecks oder eines Sterns mit N Spitzen, jeweils mit N > 2, oder eines Kreissegments auf. Entsprechende Formen eignen sich besonders, um darauf effizient bestimmte Antennenordnungen unterzubringen, zum Beispiel die oben genannten Kreissegmente mit Verteilung der Antennen auf den begrenzenden Radien.

Die Aufgabe der Erfindung wird auch gelöst durch ein Fahrzeug gemäß Patentanspruch 10 mit mindestens einer HPEM-Quelle ohne Träger, wobei die Antennen fest am Fahrzeug montiert sind. Das Fahrzeug und zumindest ein Teil dessen Ausführungsformen sowie die jeweiligen Vorteile wurden sinngemäß bereits im Zusammenhang mit der erfindungsgemäßen HPEM-Quelle erläutert.

Die Aufgabe der Erfindung wird auch gelöst durch ein Fahrzeug gemäß Patentanspruch 11 mit mindestens einer HPEM-Quelle mit Träger, wobei das Fahrzeug den Untergrund bildet und der Träger schwenkbar am Fahrzeug montiert ist. Das Fahrzeug und zumindest ein Teil dessen Ausführungsförmen sowie die jeweiligen Vorteile wurden sinngemäß bereits im Zusammenhang mit der erfindungsgemäßen HPEM-Quelle, insbesondere der Verschwenkung gegenüber dem Fahrzeug als Untergrund, erläutert.

In einer bevorzugten Ausführungsform sind am Fahrzeug mindestens zwei HPEM-Quellen vorgesehen und die Hauptrichtungen einschließlich der Winkelbereiche decken bei jeder der Quellen nur einen jeweiligen Gesamtwinkel kleiner als 360° ab. Insbesondere decken diese einen Gesamtwinkel von 360° geteilt durch die Anzahl der Quellen ab. Eventuell ist hier wieder die oben mehrfach genannte Überlappung zwischen 5% und 50% vorgesehen. Jede der HPEM-Quellen übernimmt somit die Abdeckung eines bestimmten Abschnitts der Fahrzeugumgebung. Jede der Quellen kann somit einfacher ausgeführt werden, da diese nur einen kleineren Gesamtwinkel schützen muss und keinen Rundumschutz bieten muss.

Die Aufgabe wird auch gelöst durch ein Verfahren gemäß Patentanspruch 13 zur Aussendung eines HPEM-Pulses in einer gewünschten Abstrahlrichtung. Bei dem Verfahren werden mindestens drei in fester Relativlage zueinander angebrachte Antennen zur jeweiligen Aussendung eines Pulsanteils bereitgestellt. Jeweils mindestens zwei der Antennen werden zu einer Gruppe zusammengefasst, und mindestens zwei Gruppen von Antennen werden bereitgestellt, die sich in mindestens einer Antenne unterscheiden. Jeder der Gruppen wird eine Hauptrichtung zugeordnet und mindestens zwei verschiedene Hauptrichtungen werden bereitgestellt. Alle Antennen werden hinsichtlich der Aktivierung und der Phasenlage ihres jeweiligen Pulsanteils so angesteuert, dass sich für eine der Gruppen die Pulsanteile der Antennen zum HPEM-Puls überlagern, wobei dessen aktuelle Abstrahlrichtung in einem bestimmten Winkelbereich um die Hauptrichtung gewählt wird, wobei der Winkelbereich kleiner als 360° ist.

Das Verfahren und zumindest ein Teil dessen Ausführungsformen sowie die jeweiligen Vorteile wurden sinngemäß bereits im Zusammenhang mit der erfindungsgemäßen HPEM-Quelle und dem Fahrzeug erläutert.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht auf der Grundidee, eine Anzahl (N>=2) von HPEM DS Resonator-Antennen/ Dipole-/Monopol-Antennen/ Antennenstäbe hintereinander in einer bevorzugten Richtung in Reihe bzw. Linie zu positionieren. Diese Richtung/Linie bildet dabei vorzugsweise die gewünschte Hauptabstrahlrichtung der HPEM-Strahlung /-Impulse. Die einzelnen Resonatoren/Antennen werden jeweils zueinander mit einer festen oder auch steuerbaren Phasenbeziehung zueinander betrieben. Dabei werden die Phasenbeziehungen der abgestrahlten Impulse/Wellen der einzelnen Resonatoren zueinander so gewählt, dass sich die Hauptabstrahlrichtung entlang der in Reihe angeordneten einzelnen Resonatoren ergibt. Abhängig von den Phasenbeziehungen der Impulse/Wellen an den einzelnen Resonatoren sowie den Abständen der Resonatoren entlang der Linie zueinander, ergibt sich die Hauptabstrahlrichtung entlang der geometrischen Linie entlang der Reihe der Resonatoren in Vorwärtsrichtung oder in Rückwärtsrichtung.

Verschiedene Ausbildungsformen der Ansteuerung der einzelnen Resonatoren oder Resonator-Gruppen für verschiedene Phasenbeziehungen der Pulse/Antennen zueinander sind möglich. Ein Beispiel der Phasenbeziehungen zueinander: 0, 90, 180, 270 Grad ermöglicht die Fokussierung der Abstrahlung in Vorwärtsrichtung ("vorwärts"); eine Phasenbeziehung von 270, 180, 90, 0 Grad ermöglicht eine Fokussierung der Abstrahlung in Rückwärtsrichtung'("rückwärts"). Zur Realisierung einer 360 Grad-Abdeckung können die Resonatoren und Antennen unterschiedlich angeordnet und angesteuert werden. So sind auch z. B. kreisförmige oder sternförmige Anordnungen oder völlig andere geometrisch und funktionell sinnvolle Anordnungen, z. B. um den Mittelpunkt/Zentrum einer Ground Plane (Grundplatte) oder des zu schützenden Objektes (z. B. Fahrzeug) herum, möglich.

Wesentlich für die gerichtete Abstrahlung sind neben der geometrischen Anordnung vor allem die zu realisierenden Phasenbeziehungen zwischen den einzelnen Antennen / -Stäben / Resonatoren / Stubs, respektive der abgestrahlten Impulse zueinander, um eine verstärkte, gerichtete Abstrahlung in die gewünschte Richtung zu gewährleisten. Durch die phasenverzögerte, zeitlich gesteuerte / versetzte, serielle Ansteuerung der einzelnen Antennenstäbe, die sich in einer Reihe befinden, kann der HPEM Strahl in eine Richtung fokussiert werden. Abhängig vom Abstand der einzelnen Antennenstäbe zueinander werden die Resonatoren entsprechend phasenverzögert derart angesteuert, dass sich die Wellenfronten im Wesentlichen in der gewünschten Richtung (Hauptstrahlrichtung entlang einer "Antennen-Reihe") konstruktiv überlagern. Durch geeignete Phasensteuerung der einzelnen Antennen kann der HPEM Strahl auf das Target in Richtung der Hauptstrahlrichtung gerichtet bzw. fokussiert werden. Durch Änderung der Phasenbeziehungen in einer Reihe untereinander und/oder Aktivierung weiterer einzelner Resonatoren / Antennenstäbe oder einer anderen oder weiterer Reihen bzw. Gruppen bzw. Teilgruppen von Resonatoren bzw. Antennen / -Stäbe, kann der HPEM Strahl über einen größeren Raumwinkel räumlich verteilt oder gezielt räumlich auf das Ziel eingeschwenkt und nachgeführt werden. Nicht aktivierte Resonatoren oder Antennenstäbe lassen sich dabei teilweise in geschickter Weise als "Reflektoren" zur Strahlformung nutzen. Aufgrund der räumlichen Wirkung der HPEM Impulse ist keine sehr genaue Allokation des Zieles erforderlich. Dies ist vor allem von der Richtwirkung der Resonator-Gruppen / -konfiguration und auch des verwendeten Wellenbereichs abhängig. Durch die gezielte zeitliche, phasenbezogene elektrische Ansteuerung einzelner Antennen-Stäbe / -Resonatoren oder Antennen-Gruppen, lässt sich damit für HPEM ein 360 Grad-Rundumschutz bei fest installiertem Antennen-System realisieren, ohne dass dafür eine Drehplattform erforderlich ist. Aufgrund der Einfachheit des System-Konzeptes ohne der Notwendigkeit einer extrem leistungsstarken und empfindlichen Drehplattform, ist eine einfache Integration auch auf mobilen Plattformen wie z.B. Fahrzeugen möglich. Gleichzeitig kann das System sehr platzsparend und unauffällig in die Trägerplattform integriert bzw. an die Oberflächenform adaptiert werden. Die Verwendung einer zusätzlichen "einfachen" Drehplattform zur Unterstützung der Zielnachführung und Erhöhung der ZielGenauigkeit ist ebenfalls möglich (z. B. Drehplattform mit erheblich langsamerer Drehrate, stark eingeschränktem Drehwinkelbereich und deutlich geringerer Traglast durch günstigere Gewichtsverteilung, z. B. durch Trennung der HPEM Resonator-Antennen von den Hochspannungs-Generatoren). Die grobe Nachführung des HPEM Strahls kann dann elektronisch durch Umschalten auf die entsprechenden Resonatorreihen / Antennen-Gruppen erfolgen. Während die Feinjustage der Zielnachführung über die mechanisch/elektrische Komponente der Drehplattform erfolgt. Beides ist auch umgekehrt möglich und erfordert eine genaue Abstimmung der unterschiedlichen Abdeckungsbereiche bzgl. der elektronischen und mechanischen Komponenten.

Auch die Verwendung dieses Prinzips in Teil-Segmenten, verteilt auf der Trägerplattform zur Realisierung der gewünschten Winkelabdeckung bis zu 360 Grad ist möglich. Bei Bedarf können zusätzlich bestimmte Winkelbereiche ausgespart werden. Die Abdeckung nach oben kann durch Wahl geeigneter Antennenkonfigurationen und Winkelstellung (Elevation) oder auch durch die Verwendung zusätzlichen Systeme sichergestellt werden.

Die Erfindung liefert eine vollelektronisch gesteuerte, verzugsfreie Ausrichtung / Nachführung der HPEM Antenne bzw. Abstrahlkeule auf das Ziel und Realisierung einer 360 Grad Abdeckung. Die Ausrichtung / Nachführung kann rein elektronisch erfolgen, ohne die Nutzung mechanisch bewegter Teile oder einer Drehplattform. Die Nachführung erfolgt dabei nahezu mit Lichtgeschwindigkeit. Als Zeitverzug sind nur die Signallaufzeiten auf den Steuerleitungen und der zeitliche Jitter / Delay im Schaltverhalten der elektronischen / elektrischen Bauteile zu sehen. Es sind keine mechanisch bewegten Teile und damit keine Bewegung extrem schwerer Massen (mehrere 100 kg) mit entsprechend hohen Drehmomenten erforderlich. Auch Mischformen mechanisch / elektronisch / elektrisch (z. B. durch Ergänzung des elektronischen Schwenkens mit einer mechanischen Schwenkkomponente durch eine einfache Drehplattform mit sehr begrenztem Schwenkbereich z. B. 10 Grad oder 90 Grad - nicht limitierend) sind möglich. Durch die Kombination von elektronischem und mechanisch / elektrischem Schwenken kann z. B. das Einschwenken des HPEM Strahles und die Zielverfolgung mit höherer Genauigkeit und besserer Wirkung realisiert werden. Der Betrieb mehrerer Resonatoren / Antennen / Stäbe in einer Reihe mit entsprechendem Phasenversatz ermöglicht die Verstärkung und Ausrichtung des HPEM Strahles auf das Ziel. Zudem können nahezu beliebig einzelne / mehrere Resonatoren / Antennen, Antennen-Reihen oder Antennen-Gruppen miteinander sinnvoll kombiniert und betrieben werden, um Abstrahlrichtung, Fokussierung, Öffnungswinkel und Wirkung / Reichweite entsprechend den Anforderungen anzupassen. Dies ist auch während des Betriebes möglich.

Die Erfindung bzw. das Verfahren ermöglicht die Integration von HPEM Systemen auf mobilen Plattformen bei gleichzeitiger Realisierung von größeren Reichweiten und einer 360 Grad Abdeckung.

Eine mechanische Komponente zur Drehung des Systems (Abstrahlrichtung) ist dabei nicht erforderlich, oder kann in Kombination mit der elektronischen Drehung / Nachführung auf einen deutlich kleineren Winkelbereich beschränkt werden, z. B. ein oder mehrere Teilsegmente / Winkelsegmente (Winkel zwischen den einzelnen "seriellen" Antenne- / Resonator-Anordnungen / -Gruppierungen). Dadurch lassen sich die Forderungen (Drehwinkelrate, Drehmoment, max. zulässiges Gesamtgewicht etc.) an eine Drehplattform maßgeblich reduzieren. Die Steuerung und Abstimmung erfolgt durch ein eigenes Feuerleitsystem.

Gemäß der Erfindung ergibt sich ein Verfahren und System zur Ausrichtung, Fokussierung und Nachführung von HPEM Strahlen / -Impulsen durch seriellenphasenbezogenen Betrieb mehrerer HPEM Resonatoren / Antennen / -Stäbe / - Gruppen zur Realisierung einer vollelektronisch gesteuerten 360 Grad Abdeckung ohne das Erfordernis einer Drehplattform. Möglich wird eine 360 Grad Abdeckung mit nahezu "Lichtgeschwindigkeit" bei gleichzeitiger Erhöhung der Reichweite / Performance und HPEM Integrationsfähigkeit in und HPEM Schutz für unterschiedliche auch kleinere und mobile Plattformen z. B.: Fahrzeuge zu Land, Luft und See. Steuerung und Anpassung von Leistung, Reichweite, Richtung, Öffnungswinkel bzw. Wirkfläche durch Kombination und Ansteuerung unterschiedlicher Resonatoren/Antennen/Stäbe auch während des Betriebs ist möglich. Es ergibt sich eine Kombination von elektronischer gesteuerter und mechanischer Ausrichtung, Fokussierung und Nachführung zur Verringerung der Anforderungen an die Drehplattform und Erhöhung der Integrationsfähigkeit von HPEM Antennen und - Systemen in mobile Plattformen.

Konkrete Anwendungsmöglichkeiten sind: HPEM System stationär oder auf einem Trailer für verschiedene Anwendungen (z. B. für Counter-UAS (Unmanned Aerial Systems) als Fahrzeugschutz, C-UAS Feldlagerschutz etc.); HPEM System für Land-Anwendung integriert auf einem Fahrzeug zum Eigenschutz für verschiedene Anwendungen (z. B. Counter-UAS, C-IED (Counter-Improvised Explosive Devices), Konvoi-Schutz etc.); HPEM System mobil für Luft- und See-Anwendung integriert auf einem Flugzeug, Drohne oder Schiff zum Eigenschutz für verschiedene Anwendungen (z. B.

Counter-UAS, C-IED, etc.)

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:

Figur 1      eine Gruppe mit vier Antennen in a) Draufsicht und b) Seitenansicht,

Figur 2      eine Antenne der Gruppe aus Fig. 1 im Detail,

Figur 3      die Gruppe aus Fig. 1 im Betrieb mit a) einer aktiven und vier aktiven Antennen zur Erzeugung, b) zweier HPEM-Pulse und c) eines HPEM-Pulses,

Figur 4      eine HPEM-Quelle mit vier Gruppen im Betrieb,

Figur 5      eine HPEM-Quelle mit acht Gruppen zu je a) sieben und b) fünf Antennen im Betrieb,

Figur 6      die HPEM-Quelle aus Fig. 5a bei Kombination elektronischer und mechanischer Nachführung,

Figur 7      verschiedene Formen von Grundplatten,

Figur 8      verschiedene Antennenanordnungen,

Figur 9      ein Fahrzeug mit a) vier und b) einer HPEM-Quelle in Draufsicht,

Figur 10      das Fahrzeug aus Fig. 9b in perspektivischer Ansicht,

Figur 11      ein alternatives Fahrzeug mit einer HPEM-Quelle im Betrieb.

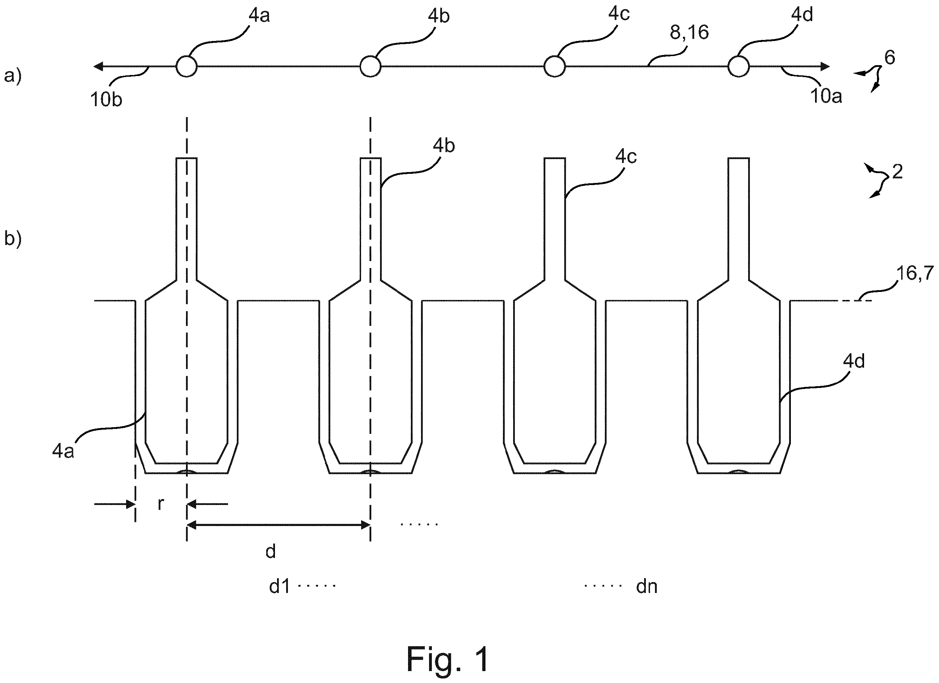

Figur 1 zeigt einen Teil einer HPEM-Quelle 2 in Form eines HPEM-DS Richtantennen-Systems, nämlich N, hier beispielhaft N=4, Antennen 4a-d. Jede Antenne 4a-d ist eine HPEM-Resonatorantenne. Die vier Antennen 4a-d sind zu einer Gruppe 6 zusammengefasst und in fester Relativlage zueinander fixiert. Hier sind die Antennen 4a-d entlang einer Geraden 16 aufgereiht. Alle Antennen 4a-d befinden sich außerdem in einer gemeinsamen Ebene 7. Der Gruppe 6 ist eine Hauptrichtung 8 (auch "Hauptstrahlrichtung" genannt) zugeordnet. Die Hauptrichtung 8 weist hierbei eine Vorwärtsrichtung 10a und eine rückwärts Richtung 10b auf. Die Antennen 4a-d weisen zueinander die Abstände d bzw. d1 ... dn auf. Insgesamt handelt es sich hier also um DS-Resonatoren in serieller Anordnung in einer Linie.

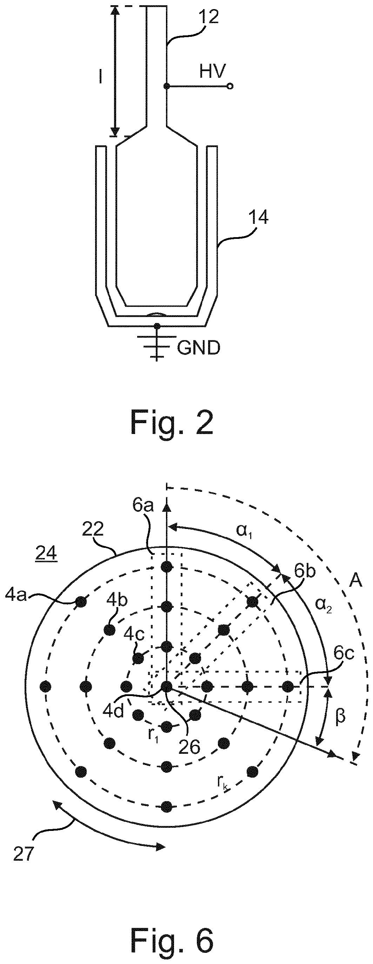

Figur 2 zeigt das Detailbild für eine der gleichen DS-Resonator-Antennen 4 (Dipol-/Monopol) aus Fig. 1.

Diese enthält einen Resonatorstab 12, der mit einer Hochspannung HV versorgbar ist, und etwa hälftig in einer auf Masse GND gelegten Massewanne 14 aufgenommen ist, so dass ein Abschnitt der Länge l (wirksame Antennenlänge) des Resonatorstabes 12 aus der Massewanne 14 herausragt. Die Massewanne 14 weist einen Radius r auf.

In einem Auslegungsbeispiel gilt

$$d, l \approx n * \frac{\lambda}{4}$$

$$2 * r \le d_n \ge \approx m * \frac{\lambda}{4}$$

mit m,n = 1,2,...N, d1 = d2 =...= dn oder/und d1 ≠ d2 ≠...≠ dn.

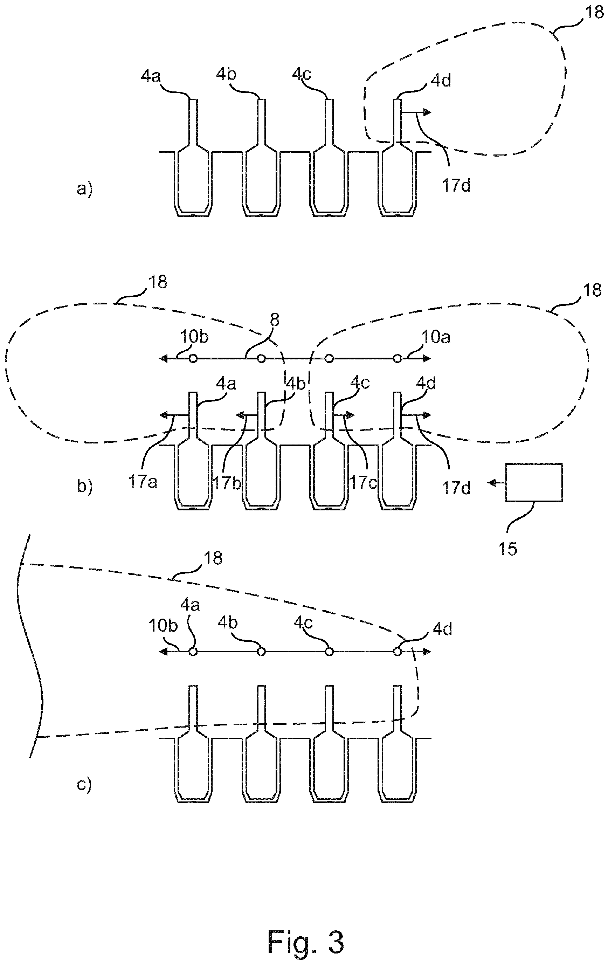

Die Figuren 3a-c zeigen die Richtkopplung unterschiedlicher Konfigurationen. In Figur 3a sind die Antennen 4a-c als passive Reflektorelemente im Leerlauf gehalten. Lediglich Antenne 4d ist mit einer Phase von 0° (ein Resonator) angesteuert. Diese sendet einen Pulsanteil 17d aus, der alleine einen HPEM-Puls 18 bildet. Somit ergibt sich der durch Strichelung nur symbolisch angedeutete HPEM-Puls 18. Die Ansteuerung aller Antennen 4a-d erfolgt durch eine hier nur symbolisch in Fig. 3b angedeutete Steuereinheit 15.

Figur 3b (Seitenansicht und Draufsicht) zeigt einen alternativen Betrieb der Gruppe 6, bei der die Antennen 4a-d in dieser Reihenfolge mit Phasen von 0°, 90°, 90° und 0° (vier Resonatoren) angesteuert werden und daher vier Pulsanteile 17a-d aussenden, die sich überlagern. Daher ergeben sich insgesamt zwei HPEM-Pulse 18, von denen einer in Vorwärtsrichtung 10a, der andere in Rückwärtsrichtung 10b abgestrahlt werden.

Figur 3c schließlich zeigt die Ansteuerung bzw. Anregung / Abstrahlung der Antennen 4a-d in dieser Reihenfolge mit Phasen 0°, 90°, 180° und 270°. Hierdurch ergibt sich eine Richtcharakteristik des HPEM-Pulses 18 in Rückwärtsrichtung.

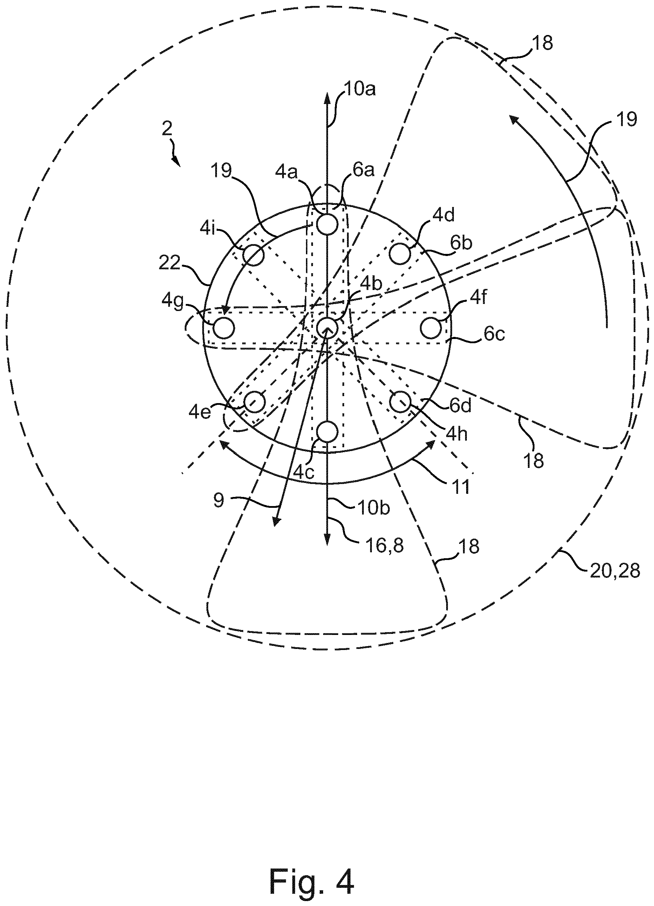

Figur 4 zeigt eine gesamte HPEM-Quelle 2 mit insgesamt neun Antennen 4a-i, die in vier Gruppen 6a-d organisiert sind, jeweils angedeutet durch einen gestrichelten Rahmen. Die Antennen 4a-i sind auf einem hier kreisförmigen Träger 22 fest montiert. In allen Gruppen 6a-d sind die Antennen wieder entlang eine jeweiligen Geraden 16 äquidistant angeordnet, die die jeweilige Hauptrichtung 8 bildet (nur für Gruppe 6a gezeigt). In jeder der Gruppen 6a-d können alternativ wieder eine, zwei oder drei der Antennen 4 aktiv sein, die restlichen als Resonatoren auf Leerlauf gehalten sein.

Durch Pfeile 19 ist veranschaulicht, wie durch rein elektronisches Umschalten des Betriebs der Gruppen 6a auf 6c einerseits und von 6c auf 6b ein jeweiliger HPEM-Puls 18 in verschiedene Richtungen ausgesendet werden kann. Durch Nutzung aller vier Gruppen 6a-d und deren jeweiligen Betrieb in Vorwärts-Richtung 10a oder Rückwärtsrichtung 10b kann eine Rundumabdeckung innerhalb des gestrichelten Umkreises ist 20 der HPEM-Quelle 2 erfolgen. Der Umkreis 20 bildet damit den Abdeckungsbereich 28 der HPEM-Quelle 2.

Durch alternative Ansteuerung der Antennen 4 kann der HPEM-Puls in einer Abstrahlrichtung 9, die in einem Winkelbereich 11 (hier +/- 45°) von der Hauptrichtung 8 abweicht, ausgesendet werden. Der Bereich bzw. die Grenzen sind durch einen Doppelpfeil und Strichelung symbolisiert. Dies geschieht durch rein elektronische / elektrische Änderung der Ansteuerung der Antennen 4, d. h. der Amplituden und/oder Phasenbeziehungen zwischen den beteiligten Antennen 4.

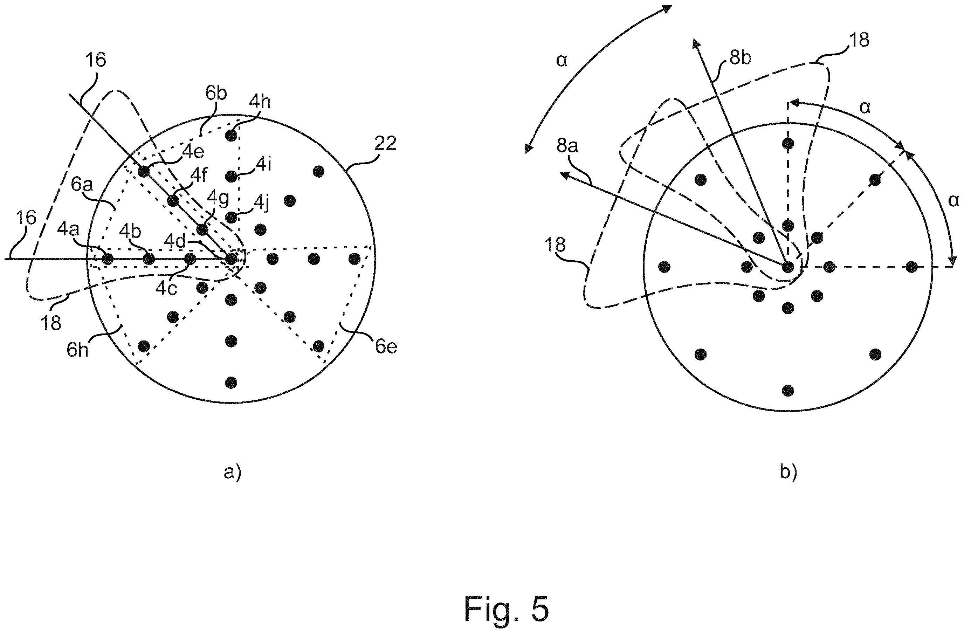

Figur 5a zeigt eine alternative HPEM-Quelle 2 mit 25 Antennen 4a-"N" (Index ist symbolisch zu verstehen, N=25), von denen nur die Antennen 4a-j bezeichnet sind. Die Antennen 4 sind in insgesamt acht Gruppen 6a-h organisiert. Jede Gruppe 6a-h enthält sieben Antennen 4. Die Antenne 4d ist allen Gruppen gemeinsam. Die Gruppen 6a, b haben die Antennen 4e-g gemeinsam, die Gruppen 6b, c die Antennen 4h-j gemeinsam usw. Die Gruppen 6h und 6a haben die Antennen 4a-c gemeinsam. In diesem Beispiel erfolgt also eine Kombination von jeweils zwei Lineargruppen von Antennen zur Erweiterung des Abstrahlbereichs bzw. der Richtcharakteristik. Die Antenne 6d kann hier als aktives Element oder als passives Reflektorelement betrieben werden. Auch hier erfolgt die Strahl-Nachführung durch Umschalten zwischen Antennenreihen bzw. -Gruppen 6 bzw. durch variierende Ansteuerung der Antennen 4. Die Gruppen sind innerhalb von Kreissegmenten mit einem Öffnungswinkel von 45°, und dabei jeweils auf den in Umfangsrichtung begrenzenden (Außen-)radien bzw. Geraden 16 des Segments, angeordnet.

Figur 5b zeigt eine vereinfachte Variante der Figur 5a, mit jeweils nur drei statt vier Antennen 4 pro Radialreihe. Die Gruppenorganisation entspricht jedoch prinzipiell derjenigen aus Figur 5a. hier allerdings mit fünf Antennen 4 pro Gruppe 6. Figur 5b verdeutlicht nochmals, wie eine Umschaltung zwischen den Gruppen 6a, b auch die jeweilige Abstrahlrichtung 9 von der Hauptrichtung 8a zur Hauptrichtung 8b um einen Winkel α von hier 45° verschwenkt. Dies entspricht auch dem Winkelversatz zwischen zwei benachbarten Radialgruppen von Antennen 4, wie in Figur 5b dargestellt ist.

Figur 6 zeigt noch mal die prinzipielle Anordnung aus Figur 5a, wobei hier der Träger 22 gegenüber einem Untergrund 24 um eine Drehachse 26 am Ort der Antenne 4d drehbar ist. Die Verschwenkbarkeit erstreckt sich hier auf einen Schwenkbereich 27 von 45°. Die Antennen 4 sind außerdem in acht alternativen Gruppen 6a-j zu je vier Antennen organisiert. Somit ist eine Kombination aus elektronisch und mechanisch gesteuerter Nachführung der Haupt(strahl)richtung 8 zur besseren Zielerfassung ermöglicht. Im Beispiel soll die Hauptrichtung 8 um den Drehwinkel A von 120° verschwenkt werden.

Durch Umschaltung von der Gruppe 6a auf die Gruppe 6c erfolgt eine Winkeländerung von zweimal 45° (α1 und α2). Zusätzlich erfolgt eine mechanische Verdrehung des Trägers 22 um die Drehachse 26 um den Schwenkwinkel β, hier 30°. Es gelten folgende Zusammenhänge: N=8 ist die Anzahl der Gruppen 6 und somit der Winkelsegmente der Winkel α1,2,... K=3 ist die Anzahl unterschiedlicher Radien der Antennen 4 zur Drehachse 26. Hier gilt α1 = α2 = ... = αN. Alternativ wären auch nicht dargestellte Ausführungsformen mit α1 ≠ α2 ≠ ... ≠ αN möglich, wobei α1 ≤ oder ≥ α2 ... an gelten kann. Für den Drehwinkel β gilt 1/2 αn ≤ β ≤ αn mit n = 1...N. Für die Radien rk mit k=1...K gilt rk= k * r1 mit r1 ≤ r2 ... ≤ rk. Der Drehwinkel A der Hauptrichtung 8 bzw. des Hauptstrahls für α1 = α2 = ... = αN und rk= k * r1 ergibt sich mit n=1...(N-1) zu

$$A = (n-1) * \alpha_1 \pm \beta$$

Dabei bildet der erste Summand den elektronischen und der zweite Summand (β) den mechanischen Anteil.

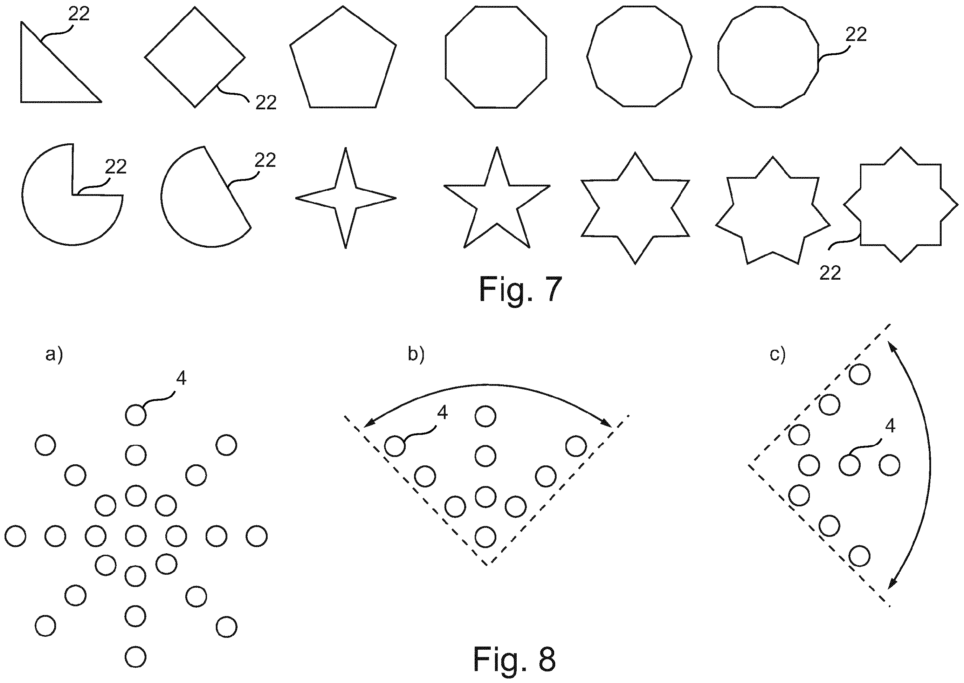

Figur 7 zeigt acht verschiedene Vielecke mit 3,4,5,8,10 und 12 Ecken, zwei Kreissegmente und fünf Sterne mit 4,5,6,7 und 8 Ecken bzw. Spitzen. All diese Formen können als Formen für Träger 22 dienen, um auf diesen beliebige Anordnungen von Antennen 4 anzubringen.

Figur 8 zeigt drei mögliche Anordnungen von Antennen 4, nämlich a) die Anordnung aus den Figuren 5a und 6 sowie b) eine kreissegmentförmige Anordnung aus drei Geraden mit zehn Antennen und c) eine vergleichbare Anordnung mit neun Antennen, bei der die gemeinsame zentrale Antenne weggelassen ist. Die Anordnung a) eignet sich, wie oben gezeigt, zur Rundumabdeckung, die Varianten b) und c) zur Abdeckung eines etwa 90° großen Segments (angedeutet durch Doppelpfeile) anhand rein elektronischer Verschwenkung der Hauptrichtung 8.

Figur 8 illustriert also, wie eckige oder andere strahlungstechnisch günstige Ausführungen der Grundplatte und der Antennenkonfigurationen möglich sind. Gezeigt sind lediglich Beispiele einiger möglicher Teil-Segmente und Antennen-Gruppen. Die Ansteuerung der einzelnen Teil-Segmente und Antennen-Gruppen richtet sich nach den Anforderungen des Abdeckungsbereichs und kann sehr unterschiedlich sein.

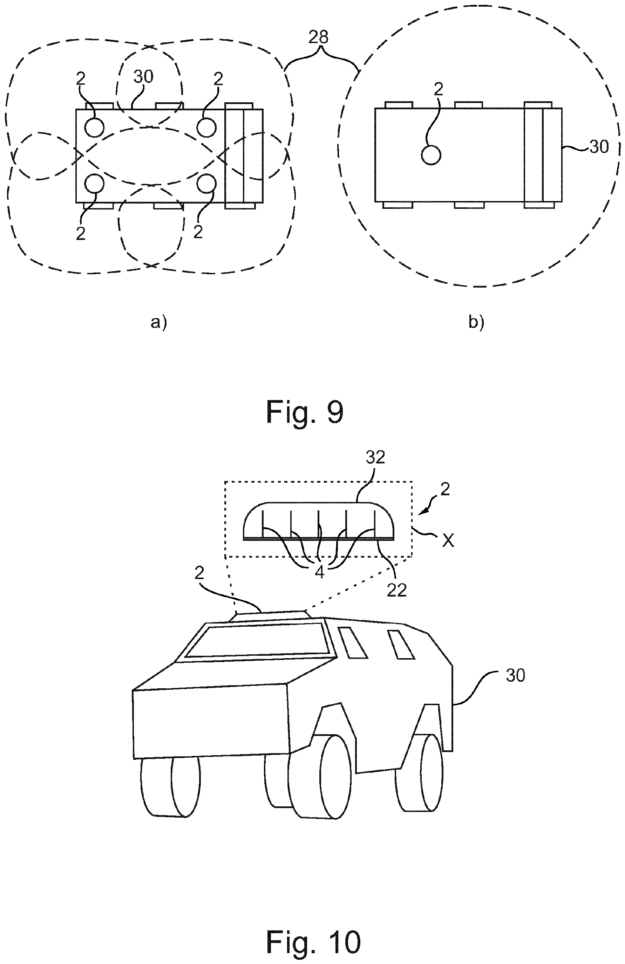

Figur 9 zeigt Integrationsbeispiele zur Realisierung einer 360° Abdeckung. Die jeweiligen Abdeckungsbereiche 28 sind gestrichelt angedeutet. Figur 9a zeigt ein Fahrzeug 30 in Draufsicht mit insgesamt vier HPEM-Quellen 2, die jeweils auf dem Fahrzeugdach fest montiert sind. Dies ist ein Beispiel einer 360° Abdeckung an einem Fahrzeug 30 mit mehreren, hier vier, Systemen (HPEM-Quellen 2). Durch Einschränkung der Wirkbereiche der Einzelsysteme (HPEM-Quellen 2) können bestimmte Bereiche ausgeblendet oder in der Wirkung durch Überlagerung verstärkt werden.

Figur 9b dagegen zeigt ein Einzelsystem (eine einzige HPEM-Quelle 2) mit 360° Abdeckung. Dabei ist der Träger 22 schwenkbar auf dem Fahrzeug 30 montiert, das daher den o.g. Untergrund 24 bildet.

Figur 10 zeigt das Fahrzeug 30 aus Figur 9b perspektivisch. Die Darstellung "X" zeigt die HPEM-Quelle des Fahrzeugs 30 vergrößert im Detail im Querschnitt. Die Antennen 4 (Resonator-/Antennenstäbe) sind unter einer Schutzhülle 32 geschützt.

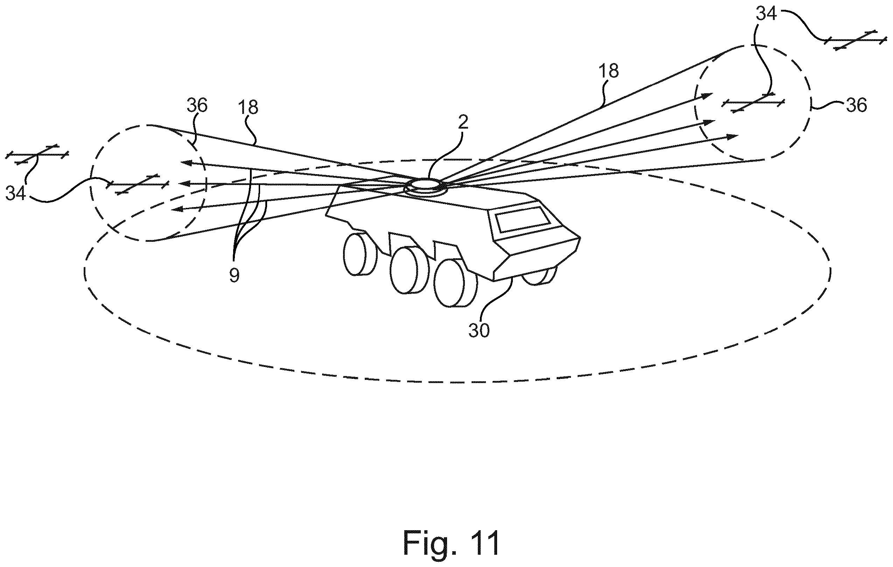

Figur 11 zeigt ein alternatives Fahrzeug 30 mit der HPEM-Quelle 2 als HPEM-Richtantennen-System. Illustriert ist der Rundumschutz des Fahrzeugs 30 durch die dargestellten Pfeile. Etwaige Bedrohungen 34 (hier Mini-Drohnen) können durch Ausrichtung der HPEM-Pulse 18 bzw. der aktuellen Abstrahlrichtung 9 auf detektierte Zielgebiete 36 abgewehrt werden. Das Fahrzeug 30 ist damit gegen die Minidrohnen geschützt.

**Bezugszeichenliste**

| | |
|---|---|
| 2 | HPEM-Quelle |
| 4,4a-n | Antenne |
| 6,6a-d | Gruppe |
| 7 | Ebene |
| 8 | Hauptrichtung |
| 9 | Abstrahlrichtung. |
| 10a, b | Vorwärts-/Rückwärtsrichtung |
| 11 | Winkelbereich |
| 12 | Resonatorstab |
| 14 | Massewanne |
| 15 | Steuereinheit |
| 16 | Gerade |
| 17,17a-d | Pulsanteil |
| 18 | HPEM-Puls |
| 19 | Pfeil |
| 20 | Umkreis |
| 22 | Träger |
| 24 | Untergrund |
| 26 | Drehachse |
| 27 | Schwenkbereich |
| 28 | Abdeckungsbereich |
| 30 | Fahrzeug |
| 32 | Schutzhülle |
| 34 | Bedrohung |
| 36 | Zielgebiet |
| | |
| HV | Hochspannung |
| GND | Masse |
| l | Länge |
| d,d1-n | Abstand |
| r | Radius |
| α | Winkel |
| β | Schwenkwinkel |
| A | Drehwinkel |

**Patentansprüche**

1. HPEM-Quelle (2) zur Aussendung eines HPEM-Pulses (18) in einer gewünschten Abstrahlrichtung (9),

   - mit mindestens drei in fester Relativlage zueinander angebrachten Antennen (4) zur jeweiligen Aussendung eines Pulsanteils (17),
   - wobei jeweils mindestens zwei der Antennen (4) zu einer Gruppe (6) zusammengefasst sind, und mindestens zwei Gruppen (6) von Antennen (4) vorhanden sind, die sich in mindestens einer Antenne (4) unterscheiden,
   - wobei jeder der Gruppen (6) eine Hauptrichtung (8) zugeordnet ist und mindestens zwei verschiedene Hauptrichtungen (8) vorhanden sind, und
   - wobei für mindestens zwei der Gruppen (6) alle Antennen (4) der Gruppe (6) entlang einer Geraden (16) angeordnet sind, wobei die Gerade (16) die jeweilige Hauptrichtung (8) ist, wobei mindestens zwei der jeweiligen Geraden (16) unterschiedliche Durchmesserlinien eines gedachten Kreises sind, wobei die Antennen (4) einer jeweiligen Gruppe (6) auf einem Radius oder dem gesamten Durchmesser entlang der Geraden (16) verteilt sind,
   - mit einer Steuereinheit (15), die dazu eingerichtet ist, die Antennen (4) hinsichtlich der Aktivierung und der Phasenlage ihres jeweiligen Pulsanteils (17) so anzusteuern, dass für mindestens eine der Gruppen (6) wenigstens zwei Antennen (4) der Gruppe aktiv angesteuert sind, wobei die Pulsanteile (17) der aktiv angesteuerten Antennen (4) sich zum HPEM-Puls (18) überlagern, dessen aktuelle Abstrahlrichtung (9) in einem bestimmten Winkelbereich (11) um die jeweilige Hauptrichtung (8) ist, wobei der Winkelbereich (11) kleiner als 360° ist.

2. HPEM-Quelle (2) nach Anspruch 1,
   **dadurch gekennzeichnet,**
   **dass** alle Antennen (4) in einer gemeinsamen Ebene (7) angeordnet sind.

3. HPEM-Quelle (2) nach einem der vorhergehenden Ansprüche,
   **dadurch gekennzeichnet,**
   **dass** für mindestens eine der Gruppen (6) alle Antennen (4) der Gruppe (6) innerhalb eines Kreissegments mit einem Öffnungswinkel nicht größer als 180° angeordnet sind.

4. HPEM-Quelle (2) nach Anspruch 3,
   **dadurch gekennzeichnet,**
   **dass** die Antennen (4) ausschließlich entlang zweier Geraden (16) angeordnet sind, die die begrenzenden Radien des Kreissegments darstellen.

5. HPEM-Quelle (2) nach einem der vorhergehenden Ansprüche,
**dadurch gekennzeichnet,**
**dass** für mindestens eine der Gruppen (6) benachbarte Antennen (4) der Gruppe (6) gleiche Abstände (d) zueinander aufweisen.

6. HPEM-Quelle (2) nach einem der vorhergehenden Ansprüche,
**dadurch gekennzeichnet,**
**dass** die Steuereinheit (15) dazu eingerichtet ist, mindestens eine der Antennen (4) als passive Reflektorantenne leerlaufend zu halten.

7. HPEM-Quelle (2) nach einem der vorhergehenden Ansprüche,
**dadurch gekennzeichnet,**
**dass** die HPEM-Quelle (2) einen Träger (22) enthält, wobei alle Antennen (4) fest auf dem Träger (22) montiert sind und der Träger (22) gegenüber einem Untergrund (24) innerhalb eines Schwenkbereiches (27) kleiner als 360° schwenkbar ist und die Steuerung (15) dazu eingerichtet ist, einen aktuellen Schwenkwinkel (β) des Trägers (22) bezüglich des Untergrundes (24) zu steuern.

8. HPEM-Quelle (2) nach Anspruch 7,
**dadurch gekennzeichnet,**
**dass** der Schwenkwinkel (β) die Hälfte des größten der Winkelbereiche (11) beträgt.

9. HPEM-Quelle (2) nach einem der Ansprüche 7 bis 8,
**dadurch gekennzeichnet,**
**dass** der Träger (22) eine Grundform eines N-Ecks oder eines Sterns mit N Spitzen, jeweils mit N > 2, oder eines Kreissegments aufweist.

10. Fahrzeug (30), mit mindestens einer HPEM-Quelle (2) nach einem der Ansprüche 1 bis 6, wobei die Antennen (4) fest am Fahrzeug montiert sind.

11. Fahrzeug (30), mit mindestens einer HPEM-Quelle (2) nach einem der Ansprüche 7 bis 9, wobei das Fahrzeug (30) den Untergrund (24) bildet und der Träger (22) schwenkbar am Fahrzeug (30) montiert ist.

12. Fahrzeug (30) nach einem der Ansprüche 10 oder 11,
**dadurch gekennzeichnet,**
**dass** am Fahrzeug (30) mindestens zwei HPEM-Quellen (2) vorgesehen sind und die Hauptrichtungen (8) einschließlich der Winkelbereiche (11) bei jeder der Quellen nur einen jeweiligen Gesamtwinkel kleiner als 360° abdecken.

13. Verfahren zur Aussendung eines HPEM-Pulses (18) in einer gewünschten Abstrahlrichtung (9), bei dem

- mindestens drei in fester Relativlage zueinander angebrachte Antennen (4) zur jeweiligen Aussendung eines Pulsanteils (17) bereitgestellt werden,
- jeweils mindestens zwei der Antennen (4) zu einer Gruppe (6) zusammengefasst werden, und mindestens zwei Gruppen (6) von Antennen (4) bereitgestellt werden, die sich in mindestens einer Antenne (4) unterscheiden,
- wobei jeder der Gruppen (6) eine Hauptrichtung (8) zugeordnet wird und mindestens zwei verschiedene Hauptrichtungen (8) bereitgestellt werden, und
- wobei für mindestens zwei der Gruppen (6) alle Antennen (4) der Gruppe (6) entlang einer Geraden (16) angeordnet werden, wobei die Gerade (16) die jeweilige Hauptrichtung (8) ist, wobei mindestens zwei der jeweiligen Geraden (16) unterschiedliche Durchmesserlinien eines gedachten Kreises sind, wobei die Antennen (4) einer jeweiligen Gruppe (6) auf einem Radius oder dem gesamten Durchmesser entlang der Geraden (16) verteilt werden,
- alle Antennen (4) hinsichtlich der Aktivierung und der Phasenlage ihres jeweiligen Pulsanteils (17) so angesteuert werden, dass für mindestens eine der Gruppen (6) wenigstens zwei Antennen (4) der Gruppe (6) aktiv angesteuert werden, wobei die Pulsanteile (17) der aktiv angesteuerten Antennen (4) zum HPEM-Puls (2) überlagern, wobei dessen aktuelle Abstrahlrichtung (9) in einem bestimmten Winkelbereich (11) um die Hauptrichtung (8) gewählt wird, wobei der Winkelbereich (11) kleiner als 360° ist.

## Claims

1. HPEM source (2) for the emission of an HPEM pulse (18) in a desired radiation direction (9),

     - with at least three antennas (4) fitted at a fixed position relative to one another for the respective emission of a pulse component (17),
     - wherein at least two of the antennas (4) are combined in each case into a group (6), and at least two groups (6) of antennas (4) which differ from one another in terms of at least one antenna (4) are present,
     - wherein one main direction (8) is assigned to each of the groups (6) and at least two different main directions (8) are present, and
     - wherein, for at least two of the groups (6), all antennas (4) of the group (6) are arranged along a straight line (16), wherein the straight line (16) is the respective main direction (8), wherein at least two of the respective straight lines (16) are different diameter lines of an imaginary circle, wherein the antennas (4) of a respective group (6) are distributed along the straight lines (16) on one radius or on the entire diameter,
- with a control unit (15) which is configured to control the antennas (4) in terms of the activation and the phase angle of their respective pulse component (17) in such a way that, for at least one of the groups (6), at least two antennas (4) of the group are actively controlled, wherein the pulse components (17) of the actively controlled antennas (4) are superimposed on one another to form the HPEM pulse (18), the current radiation direction (9) of which is in a specific angle range (11) around the respective main direction (8), wherein the angle range (11) is less than 360°.

2. HPEM source (2) according to Claim 1,
**characterized in that**
all antennas (4) are arranged in a common plane (7).

3. HPEM source (2) according to one of the preceding claims,
**characterized in that**,
for at least one of the groups (6), all antennas (4) of the group (6) are arranged within a circle segment with an aperture angle no greater than 180°.

4. HPEM source (2) according to Claim 3,
**characterized in that**
the antennas (4) are arranged exclusively along two straight lines (16) which represent the limiting radii of the circle segment.

5. HPEM source (2) according to one of the preceding claims,
**characterized in that**,
for at least one of the groups (6), adjacent antennas (4) of the group (6) have the same distances (d) between them.

6. HPEM source (2) according to one of the preceding claims,
**characterized in that**
the control unit (15) is configured to keep at least one of the antennas (4) operating at no load as a passive reflector antenna.

7. HPEM source (2) according to one of the preceding claims,
**characterized in that**
the HPEM source (2) contains a support (22), wherein all antennas (4) are mounted in a fixed position on the support (22) and the support (22) is pivotable in relation to a foundation (24) within a pivot range (27) of less than 360° and the controller (15) is configured to control a current pivot angle ($\beta$) of the support (22) in relation to the foundation (24).

8. HPEM source (2) according to Claim 7,
**characterized in that**
the pivot angle ($\beta$) is half of the greatest of the angle ranges (11).

9. HPEM source (2) according to one of Claims 7 to 8,
**characterized in that**
the support (22) has a basic shape of an N-sided figure or a star with N points, in each case where N > 2, or a circle segment.

10. Vehicle (30) with at least one HPEM source (2) according to one of Claims 1 to 6, wherein the antennas (4) are mounted in a fixed position on the vehicle.

11. Vehicle (30) with at least one HPEM source (2) according to one of Claims 7 to 9,
wherein the vehicle (30) forms the foundation (24) and the support (22) is pivotably mounted on the vehicle (30) .

12. Vehicle (30) according to either of Claims 10 and 11,
**characterized in that**
at least two HPEM sources (2) are provided on the vehicle (30) and the main directions (8), including the angle ranges (11), cover only a respective total angle of less than 360° in the case of each of the sources.

13. Method for the emission of an HPEM pulse (18) in a desired radiation direction (9), in which

- at least three antennas (4) fitted in a fixed position relative to one another are provided for the respective emission of a pulse component (17),
- at least two of the antennas (4) are combined in each case into a group (6), and at least two groups (6) of antennas (4) are provided which differ from one another in terms of at least one antenna (4),
- wherein one main direction (8) is assigned to each of the groups (6) and at least two different main directions (8) are provided, and
- wherein, for at least two of the groups (6), all antennas (4) of the group (6) are arranged along a straight line (16), wherein the straight line (16) is the respective main direction (8), wherein at least two of the respective straight lines (16) are different diameter lines of an imaginary circle, wherein the antennas (4) of a respective group (6) are distributed along the straight lines (16) on one radius or on the entire diameter,
- all antennas (4) are controlled in terms of the activation and phase angle of their respective pulse component (17) in such a way that, for at least one of the groups (6), at least two antennas (4) of the group (6) are actively controlled, wherein the pulse components (17) of the actively controlled antennas (4) are superimposed on one another to form the HPEM pulse (2), wherein the current radiation direction (9) of said pulse is selected in a specific angle range (11) around the main direction (8), wherein the angle range (11) is less than 360°.

## Revendications

1. Source HPEM (2) permettant d'émettre une impulsion HPEM (18) dans une direction de rayonnement (9) souhaitée,

   - comprenant au moins trois antennes (4) installées dans une position relative fixe les unes par rapport aux autres en vue de l'émission respective d'une part d'impulsion (17),
   - dans laquelle respectivement au moins deux des antennes (4) sont rassemblées en un groupe (6), et il existe au moins deux groupes (6) d'antennes (4) qui se distinguent par au moins une antenne (4),
   - dans laquelle une direction principale (8) est affectée à chacun des groupes (6), et il existe au moins deux directions principales (8), et
   - dans laquelle, pour au moins deux des groupes (6), toutes les antennes (4) du groupe (6) sont disposées le long d'une droite (16), la droite (16) étant la direction principale (8) respective, au moins deux des droites (16) respectives étant des lignes diamétrales différentes d'un cercle imaginaire, les antennes (4) d'un groupe (6) respectif étant réparties le long de la droite (16) sur un rayon ou le diamètre entier,
   - comprenant une unité de commande (15) qui est aménagée pour piloter les antennes (4) quant à l'activation et à la position de phase de leur part d'impulsion respective (17) de telle sorte que pour au moins l'un des groupes (6), au moins deux antennes (4) du groupe sont pilotées activement, les parts d'impulsion (17) des antennes (4) pilotées activement se superposant à l'impulsion HPEM (18) dont la direction de rayonnement actuelle (9) se situe dans une certaine plage angulaire (11) autour de la direction principale (8) respective, la plage angulaire (11) étant inférieure à 360°.

2. Source HPEM (2) selon la revendication 1, **caractérisée en ce que** toutes les antennes (4) sont disposées dans un plan commun (7).

3. Source HPEM (2) selon l'une quelconque des revendications précédentes, **caractérisée en ce que** pour au moins l'un des groupes (6), toutes les antennes (4) du groupe (6) sont disposées à l'intérieur d'un segment de cercle ayant un angle d'ouverture qui n'est pas supérieur à 180°.

4. Source HPEM (2) selon la revendication 3, **caractérisée en ce que** les antennes (4) sont disposées exclusivement le long de deux droites (16) qui représentent les rayons de limitation du segment de cercle.

5. Source HPEM (2) selon l'une quelconque des revendications précédentes, **caractérisée en ce que** pour au moins l'un des groupes (6), des antennes voisines (4) du groupe (6) présentent les mêmes espacements (d).

6. Source HPEM (2) selon l'une quelconque des revendications précédentes, **caractérisée en ce que** l'unité de commande (15) est aménagée pour maintenir au moins l'une des antennes (4) en circuit ouvert comme une antenne à réflecteur passive.

7. Source HPEM (2) selon l'une quelconque des revendications précédentes, **caractérisée en ce que** la source HPEM (2) comprend un support (22), dans laquelle toutes les antennes (4) sont montées solidement sur le support (22) et le support (22) est pivotant par rapport à un fond (24) à l'intérieur d'une plage de pivotement (27) inférieure à 360°, et la commande (15) est aménagée pour commander un angle de pivotement actuel (β) du support (22) par rapport au fond (24).

8. Source HPEM (2) selon la revendication 7, **caractérisée en ce que** l'angle de pivotement (β) est la moitié de la plus grande des plages angulaires (11).

9. Source HPEM (2) selon l'une quelconque des revendications 7 à 8, **caractérisée en ce que** le support (22) présente une forme de base d'un polygone à N angles ou d'une étoiles à N sommets, où N > 2 respectivement, ou d'un segment de cercle.

10. Véhicule (30), comprenant au moins une source HPEM (2) selon l'une quelconque des revendications 1 à 6, les antennes (4) étant montées solidement sur le véhicule.

11. Véhicule (30), comprenant au moins une source HPEM (2) selon l'une quelconque des revendications 7 à 9, le véhicule (30) formant le fond (24), et le support (22) étant monté pivotant sur le véhicule (30).

12. Véhicule (30) selon l'une quelconque des revendications 10 ou 11, **caractérisé en ce que** sur le véhicule (30), au moins deux sources HPEM (2) sont prévues, et les directions principales (8), y compris les plages angulaires (11), ne couvrent pour chacune des sources qu'un angle total respectif inférieur à 360°.

13. Procédé permettant d'émettre une impulsion HPEM (18) dans une direction de rayonnement (9) souhaitée, dans lequel

> - au moins trois antennes (4) installées dans une position relative fixe les unes par rapport aux autres sont prévues pour l'émission respective d'une part d'impulsion (17),
> - dans laquelle respectivement au moins deux des antennes (4) sont rassemblées en un groupe (6), et au moins deux groupes (6) d'antennes (4) sont prévus qui se distinguent par au moins une antenne (4),
> - dans laquelle une direction principale (8) est affectée à chacun des groupes (6), et il existe au moins deux directions principales (8), et
> - dans laquelle, pour au moins deux des groupes (6), toutes les antennes (4) du groupe (6) sont disposées le long d'une droite (16), la droite (16) étant la direction principale (8) respective, au moins deux des droites (16) respectives étant des lignes diamétrales différentes d'un cercle imaginaire, les antennes (4) d'un groupe (6) respectif étant réparties le long de la droite (16) sur un rayon ou le diamètre entier,
> - toutes les antennes (4) étant pilotées quant à l'activation et à la position de phase de leur part d'impulsion (17) respective de telle sorte que pour au moins l'un des groupes (6), au moins deux antennes (4) du groupe (6) sont pilotées activement, les parts d'impulsion (17) des antennes (4) pilotées activement se superposant à l'impulsion HPEM (2), la direction de rayonnement actuelle (9) de celle-ci étant sélectionnée dans une certaine plage angulaire (11) autour de la direction principale (8), la plage angulaire (11) étant inférieure à 360°.

a)

4a          4b          4c      8,16    4d

                                                6

10b                                      10a

b)

4b

                                        16,7

4a

                                        4d

r

d

d1 · · · · ·                    · · · · · dn

Fig. 1

EP 3 641 056 B1

Fig. 2

Fig. 6

Fig. 3

Fig. 4

Fig. 5

Fig. 7

Fig. 8

EP 3 641 056 B1

a)

b)

# Fig. 9

# Fig. 10

Fig. 11

EP 3 641 056 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3217188 A1
- US 6317092 B1
- US 8514130 B1
- US 2018058826 A1